# NOUVEAU FASCICULE DE BREVET EUROPEEN

(11) **EP 0 730 991 B2**
(45) Date de publication et mention de la décision concernant l'opposition: **02.01.2002**
(45) Mention de la délivrance du brevet: 19.11.1997
(21) Numéro de dépôt: 96870029.4
(22) Date de dépôt: 08.03.1996
(51) Int. Cl.: B60K 17/22, B60K 17/08, F16H 57/02

(54) **Dispositif de transmission**
Getriebe
Gearbox

(30) Priorité: 10.03.1995 BE 9500211
(43) Date de publication de la demande: 11.09.1996
(73) Titulaire: Van Wonterghem, Antoine, 9500 Geraardsbergen (BE)
(72) Inventeur: Van Wonterghem, Antoine, 9500 Geraardsbergen (BE)
(74) Mandataire: Vandeberg, Marie-Paule L.G.

(56) Documents cités:
- FR-A- 2 168 839
- FR-A- 2 204 159
- US-A- 3 656 573
- Usage préalable à ISUZU:Angebot vom 5.7.1994, Rechnung vom 23.9.1994 und Lieferschein vom 22.9.1994 einer Steyr Drop-Box DR1610 mit Vorkehrung für Parkbremsanbau-ADM Prototyp - ISUZU version()
- Feuille de dessin 171 610 000 001 Feuille de dessin 171 610 002 000 Feuille de dessin sans date et numéro
- Prospectus Liebherr "Mobilkran LTM 1300",Impressum TP 224 1.3.95
- Prospectus "Unimog-Triebkopf", Impressum WZ 3240/00/00/1272 avec feuille de dessin 421 000 19 26
- Prospectus "Allison Transmissions automatic models CL(B)T 750 et CL(B)T750(DB)", Impressum SA 1388B 8-77
- Betriebserlaubnis für LTM 1300 vom Kraftfahrzeug-Bundesamt vom 14.8.1991 mit Technischem Bericht 18 10 11 0873
- Photo du Mobilkran LTM 1300 de la maison LIEBHERR, BAUMA 1992
- Eidesstattliche Erklärung de Herr Dipl.Ing. Walter Haberer, daté 11.5,1999

## Description

L'invention concerne les dispositifs de transmission pour véhicules à cabine avant et châssis à carrosser. L'invention concerne plus particulièrement les véhicules destinés, d'origine ou après transformation, à recevoir une plate-forme arrière surbaissée, notamment les véhicules forains, les véhicules-laboratoires ou de commerce itinérant.

Pour des raisons évidentes d'abaissement des coûts, les constructeurs de véhicules à usage spécifique tels que décrits ci-dessus utilisent généralement des châssis de véhicules standard fournis par les grands constructeurs ou des constructeurs spécialisés.

Le cas des véhicules à plate-forme arrière surbaissée pose à cet égard un problème.

En effet, la plate-forme surbaissée oblige le constructeur à utiliser des véhicules de base à traction avant; cela ne pose pas de gros problème pour des véhicules de puissance limitée (type camionnette) qui offrent un vaste choix dans cette gamme de véhicule.

Cependant, si l'on veut disposer d'un véhicule plus lourd (au-delà de 6 tonnes), les véhicules de base les plus courants sont des véhicules tracteurs à cabine avant, conçus d'origine pour la propulsion, voire pour une traction sur l'ensemble des roues, ou comportant un système de transmission dérivé de la traction 4X4 ou 6X6. En conséquence, le groupe [boîte de vitesse + transmission] de ces véhicules de base occupe une place importante depuis l'arrière de la cabine, ce qui limite proportionnellement la longueur possible de la plate-forme surbaissée. Un tel système de transmission, qui est décrit, par exemple, dans le document US-A-3,656,573, est, du point de vue mécanique, relativement élaboré puisqu'il doit pouvoir être adapté à différents types de transmission.

Cette complexité se répercute sur le prix du véhicule et induit, en outre, des pertes mécaniques par friction non négligeables.

On a donc cherché à développer, au départ de véhicules tracteurs à cabine classiques, un dispositif de transmission qui, sans augmentation notable de coût par rapport au véhicule de base, soit mieux adapté pour les véhicules à plate-forme surbaissée, en permettant notamment d'allonger la longueur utile de la plate-forme surbaissée.

Du document "Mobilkran LTM 1300" est connu un véhicule automoteur avec plusieurs essieux moteurs et à cabine avant, comprenant une boîte de vitesse dont l'arbre de sortie est disposé longitudinalement par rapport à l'axe du véhicule, à l'arrière de la boîte de vitesse, et connecté à un dispositif de transmission du type de Allison CL(BT). Ledit dispositif transmission selon le prospectus "Allison transmission" comprend:
- un carter comportant une face avant dotée de moyens de positionnement par rapport à la face arrière de la boîte de vitesse, un passage pour l'arbre de sortie de la boîte de vitesse et un passage pour un arbre de renvoi;
- un premier engrenage apte à être monté sur l'arbre de sortie de la boîte de vitesse;
- un deuxième engrenage monté sur l'arbre de renvoi, lequel est disposé à un niveau inférieur au niveau de l'arbre de sortie de la boîte de vitesse,
- un engrenage intermédiaire en prise permanente avec le premier engrenage et le deuxième engrenage, les trois engrenages étant disposés sensiblement dans un même plan, ce plan étant transversal par rapport à l'axe du véhicule lorsque le dispositif est monté sur le véhicule.

Du document "Unimog" est connu un Véhicule automoteur à traction avant, à cabine avant, et à châssis avec plate-forme surbaissée, comprenant un pont avant et une boîte de vitesse dont l'arbre de sortie est disposé longitudinalement par rapport à l'axe du véhicule, à l'arrière de la boîte de vitesse, et connecté à un dispositif de transmission.

Un premier but de l'invention est de fournir un tel dispositif de transmission qui permette de réduire au maximum l'encombrement vers l'arrière du groupe [boîte de vitesse + transmission] de tels véhicules.

Un autre but de l'invention est de fournir un dispositif de transmission qui permette de réduire, autant que possible, les modifications à apporter au véhicule de base.

Un autre but de l'invention est de fournir un tel dispositif qui puisse transmettre sans problème une puissance élevée.

Un autre but de l'invention est que le dispositif de transmission soit adaptable à une grande variété de modèles de véhicules de base, de façon à pouvoir être fabriqué en série, donc à coût réduit.

Un autre but de l'invention est que ce dispositif fasse appel, dans la mesure du possible, à des pièces standardisées, réduisant les coûts de fabrication et les problèmes de stock.

L'objet de l'invention est un véhicule défini par les caractérisques de la revendication 1.

Les trois engrenages sont de préférence des engrenages droits à denture hélicoïdale.

Les dents de ces engrenages forment avantageusement un angle de 20° avec leurs axes respectifs.

Suivant une forme de réalisation préférée, les diamètres des engrenages sont tels que le rapport de sortie du dispositif est compris entre 1/1 et 1/1,6 et de préférence de l'ordre de 1/1,27.

Le carter comporte généralement un point bas, un orifice de vidange étant ménagé à ce point bas.

Dans ce mode de réalisation, l'axe de l'engrenage intermédiaire et l'axe de l'arbre de renvoi sont soutenus par des moyens de centrage et de guidage directement solidaires de la face avant et de la face arrière du carter.

La face arrière est de préférence percée respectivement à hauteur de l'axe du deuxième engrenage, et de l'axe de l'engrenage intermédiaire par des orifices permettant l'insertion et l'accès aux moyens de centrage et de guidage correspondants, un opercule couvrant hermétiquement chacun de ces orifices.

Les moyens de centrage et de guidage sont généralement des roulements à cylindre ou à aiguilles.

Suivant une forme de réalisation du dispositif suivant l'invention, l'axe de l'arbre de renvoi est disposé à proximité du plan vertical comprenant l'axe de l'arbre de sortie de la boîte de vitesse.

Suivant une autre forme de réalisation de ce dispo- 5 sitif, l'arbre de renvoi est déporté latéralement vers la gauche ou vers la droite par rapport au plan vertical comprenant l'axe de l'arbre de sortie de la boîte de vitesse.

Avantageusement, un manchon de protection est fixé sur la face avant du carter, autour de l'axe de renvoi.

Suivant une variante de réalisation, le dispositif comprend, en outre, une pompe hydraulique.

Le dispositif suivant l'invention peut aussi bien être fourni aux constructeurs spécialisés (carrossiers etc..) comme ensemble standard pour remplacer la boîte de transfert à cardans montée d'origine sur les véhicules tracteurs de base, qu'être fourni aux grands constructeurs pour constituer ainsi une option d'origine pour les véhicules de base.

D'autres particularités et avantages de l'invention ressortiront de la description d'un mode de réalisation particulier, référence étant faite aux figures annexées, dans lesquelles:
La Fig. 1 est une vue latérale schématique d'un véhicule à cabine et à plate-forme surbaissée, doté d'un dispositif de transmission suivant l'invention;
La Fig. 2 est une vue schématique du dessus du véhicule de la Fig. 1;
La Fig. 3 est une vue latérale schématique d'un véhicule à plate-forme surbaissée, doté d'une transmission classique, suivant l'art antérieur;
La Fig. 4 est une vue schématique du dessus du véhicule suivant l'art antérieur de la Fig. 3;
La Fig. 5 est une vue en coupe transversale suivant la ligne V-V des Figs. 1 et 2;
la Fig. 6 est une vue en coupe suivant la ligne VI-VI de la Fig. 5;
Les Figs. 7, 8 et 9 sont des vue en coupe transversale d'autres modes de réalisation du dispositif de transmission suivant l'invention.

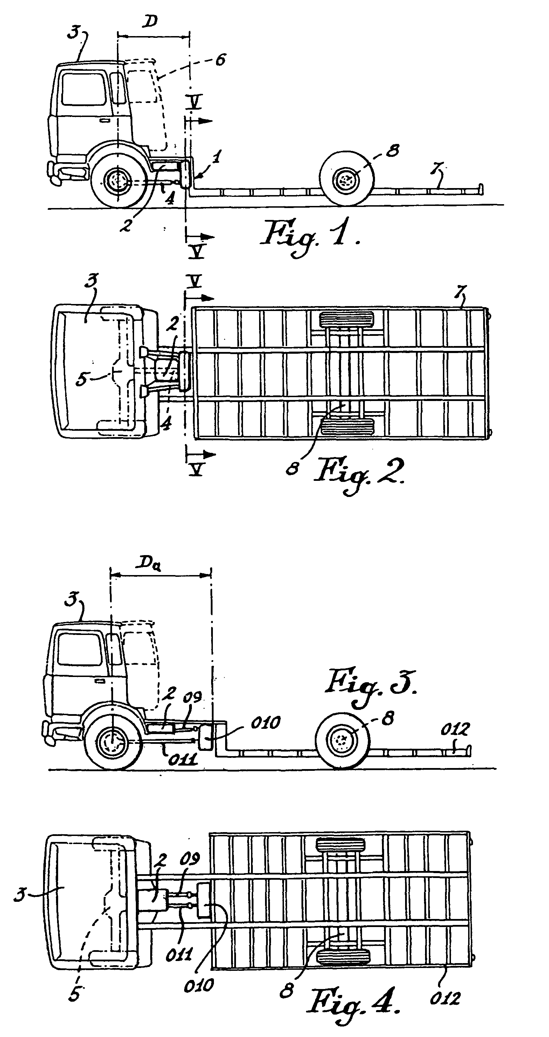

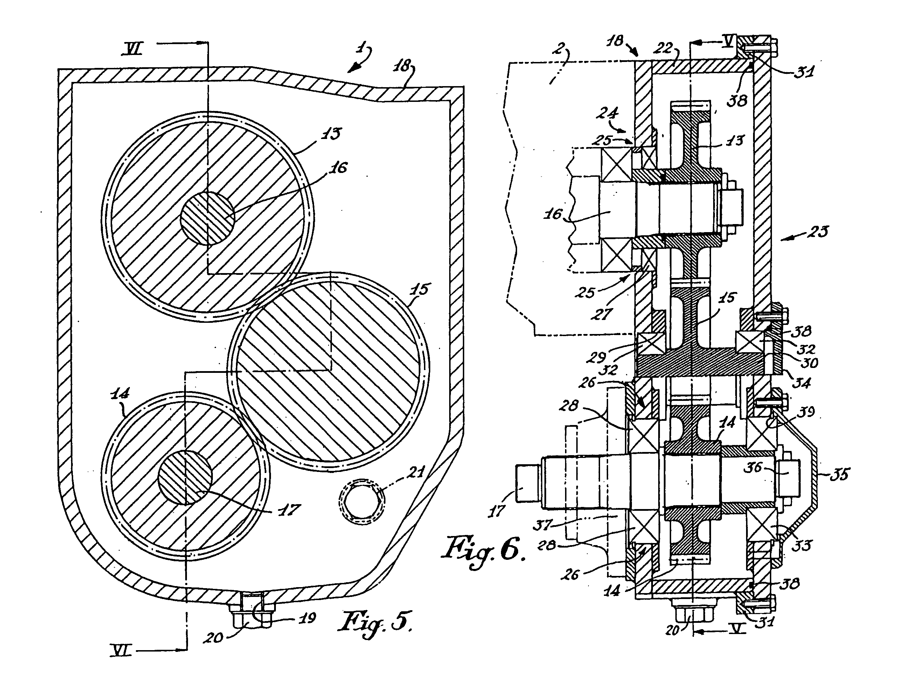

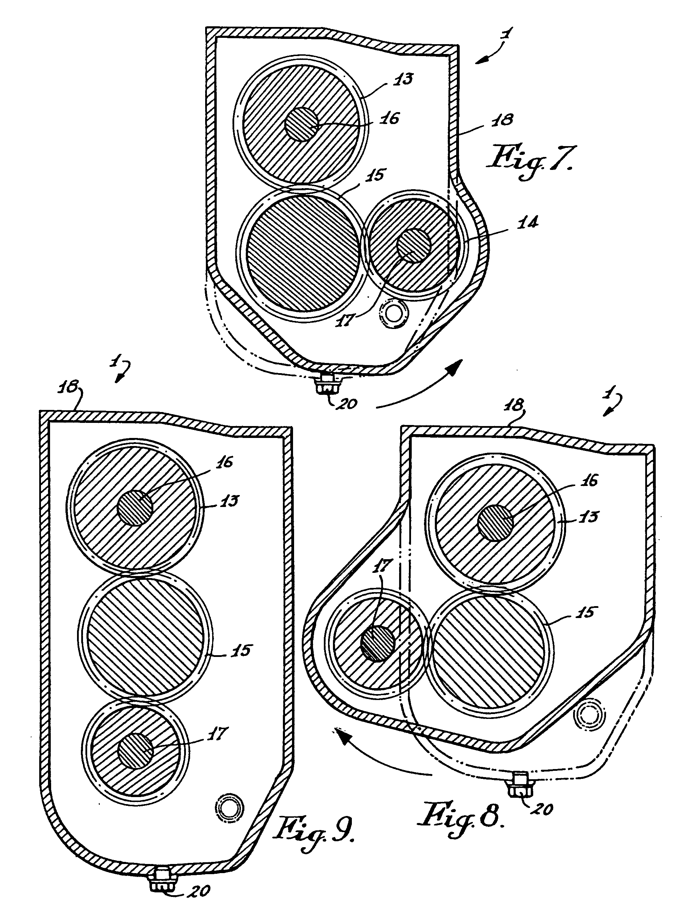

Les Figs. 1 et 2 montrent, respectivement en vue de côté et en vue du dessus, un véhicule carrossable muni du dispositif de transmission 1 suivant l'invention. Celui-ci est accolé à l'arrière de la boîte de vitesse 2 d'origine du véhicule de base, disposée avec le bloc-moteur (non représenté) sous la cabine 3 du véhicule de base.

Un arbre à cardans 4 relie le dispositif de transmission 1 au pont avant 5 du véhicule.

Le véhicule peut être équipé d'une cabine classique 3 ou d'une cabine étendue 6 (représentée en pointillé à la Fig. 1). Comme, lors du montage du dispositif de transmission 1, l'avant n'a subi qu'une transformation minime, il conserve tous les avantages du véhicule de base (notamment une grande facilité d'accès aux organes moteurs grâce à la cabine 3, 6 basculante).

L'arrière du châssis du véhicule transformé est constitué par une plate-forme surbaissée 7 soutenue par un essieu arrière 8 qui n'a aucune fonction motrice. (La suspension arrière peut suivant le poids du véhicule comporter un ou deux essieux.)

Les avantages du véhicule équipé du dispositif de transmission 1 suivant l'invention ressortent immédiatement si on compare le véhicule représenté aux Figs. 1 et 2 à un véhicule similaire suivant l'art antérieur tel que montré aux Figs. 3 et 4 (les chiffres de référence relatifs à ce véhicule suivant l'art antérieur sont précédés d'un 0).

Dans ce véhicule suivant l'art antérieur, la boîte de vitesse 2 d'origine transmet le couple du moteur via un arbre à cardan 09 vers une boîte de transfert (4X4) 010 située en arrière du châssis d'origine. Cette boîte de transfert 010 comporte normalement une sortie vers le(s) pont(s) arrière(s) 8, qui n'est pas utilisée, et une sortie vers le pont avant 5 auquel elle est reliée par un second arbre à cardan 011. La boîte de transfert 010 est, mécaniquement parlant, relativement complexe.

La plate-forme surbaissée 012 du véhicule suivant l'art antérieur est, à empattement égal, beaucoup plus courte que celle du véhicule représenté aux Figs. 1 et 2, la distance entre l'axe du train avant et l'arrière du système de transmission (Dₐ) étant nettement plus grande que la distance correspondante (D) du véhicule équipé du dispositif suivant l'invention. La différence (Dₐ-D) permet d'allonger d'autant la longueur utile de la plate-forme. Le gain en longueur obtenu est de l'ordre de 1 à 1,2 mètre.

Encore faut-il que ce gain en longueur n'entraîne pas des conditions économiquement inacceptables, c'est-à-dire que le remplacement de la boîte de transfert 010 montée en série sur le véhicule par le dispositif suivant l'invention 1 n'entraîne pas (ou pratiquement pas) de surcoût.

Ce résultat est effectivement atteint grâce à l'approche qui a été faite du problème, menant à l'élaboration d'un dispositif mécaniquement très simple, fiable, facile à monter, d'un prix de revient tel que, même en prenant en compte le temps de montage ou de substitution à une boîte de transfert standard 010, il constitue une alternative concurrentielle à cette boîte standard 010.

La Fig. 5 montre, en coupe transversale, le dispositif de transmission 1 suivant l'invention, mis en place sur le véhicule qui sera décrit en se référant également à la Fig. 6.

Le dispositif 1 comprend essentiellement trois engrenages 13, 14, 15 situés essentiellement dans un même plan.

Le premier engrenage 13 est monté sur l'arbre de sortie 16 de la boîte de vitesse 2 (représentée partiellement en ligne interrompue à la Fig. 6).

Le deuxième engrenage 14 est fixé sur un arbre de renvoi 17. Un engrenage intermédiaire 15 met en prise le premier et le deuxième engrenage.

Un carter 18, fixé à l'arrière de la boîte de vitesse 2, entoure les trois engrenages 13, 14, 15.

Ce carter 18, une fois mis en service, contient un lubrifiant; en conséquence, il comporte un orifice 19, situé à son point bas, et fermé par un bouchon fileté 20 ainsi qu'un orifice de mise à niveau 21.

Suivant un mode de réalisation non représenté, une pompe hydraulique peut être montée sur le carter 18 de façon à activer la lubrification des organes en mouvement.

La forme du carter 18 est étudiée pour qu'il présente un encombrement minimum au regard de la puissance à transmettre. Comme représenté à la Fig. 6, ce carter 18 est constitué d'un corps 22 et d'un couvercle 23 formant un ensemble hermétique; il est de poids réduit et forme à la fois le support et l'enveloppe des engrenages 13, 14, 15.

Le corps 22 du carter 18 présente une forme de cuvette mise sur chant, le fond de cette cuvette formant la face avant 24 du carter 18.

La face avant 24 est percée de part en part pour le passage de l'arbre de sortie 16 de la boîte de vitesse 2 et de l'axe de renvoi 17. Des logements 25, 26 sont ménagés autour de ces passages pour la fixation de moyens de support rotatifs 27, 28 de ces arbres. Ces moyens de support rotatifs sont, en l'occurrence, des roulements à cylindres 27, 28, un logement 29 est également disposé à l'emplacement de l'axe 30 de l'engrenage intermédiaire 15.

Le couverde 23 constituant la face arrière du carter 18, est fixé au corps 22 par boulonnage sur une bride périphérique 31 qui borde le pourtour du corps 22 du carter 18. Le couverde 23 du carter est également percé de deux orifices, centrés respectivement sur l'axe 30 de l'engrenage intermédiaire 15 et sur celui de l'arbre de renvoi 17. Des moyens de support rotatifs 32, 33 (en l'occurrence des roulements à cylindre 32, 33) sont fixés sur le couvercle 23 du carter, en vis-à-vis des logements 26, 29 de la face avant 24 du corps 22 du carter 18. Les orifices ménagés dans le couvercle permettent d'accéder à ces roulements à cylindre 32, 33 sans devoir ouvrir le carter 18.

L'orifice correspondant à l'axe 30 de l'engrenage intermédiaire 15 est hermétiquement fermé par un opercule 34 fixé par boulonnage.

L'orifice du couvercle 23 correspondant à l'axe de renvoi 17 est fermé par une coupelle 35, qui permet d'accéder aisément, si nécessaire, à l'extrémité arrière 36 de l'arbre de renvoi 17.

De façon optionnelle, l'extrémité avant de l'arbre de renvoi 17 est protégée des heurts et des salissures par un manchon 37 (représenté en traits interrompus) fixé sur la face avant 24 du carter 18.

L'étanchéité entre les différentes parties 22, 23, 34 du carter 18 est réalisée par l'interposition de joints toriques 38 ou de joints plats 39.

La simplicité et la compacité du dispositif de transmission 1 lui assure un fonctionnement sans problème pour des véhicules dont le poids peut varier entre 6 et 12 tonnes (PTAC) ou 21 tonnes (PTRC) et développant jusqu'à 250 CV et plus.

Les pertes mécaniques par frottement sont réduites à un minimum du fait de la simplicité de la structure et de l'alignement dans un même plan des engrenages 13, 14, 15.

Le diamètre relativement important des engrenages 13, 14, 15 et la place dont on dispose en dépit de la faible largeur du carter 18 permettent d'utiliser des dentelures transmettant sans problème des couples importants.

La production de vibrations - toujours indésirable - est évitée par l'utilisation d'engrenages 13, 14, 15 à dentelure hélicoïdale. A cet égard, une indinaison des dents de 20° par rapport à l'axe donne les meilleurs résultats. La suppression des vibrations, outre qu'elle réduit les bruits émis, a aussi un effet positif sur la durée de vie du mécanisme.

Le rapport entre les diamètres des trois engrenages 13,14,15 est choisi de façon à ne pas modifier sensiblement le rapport de transmission entre la boîte de vitesse 2 et le pont avant 5. Ce rapport de transmission est compris en l'occurrence entre 1/1 et 1/1,6 avec une valeur optimale avoisinant 1/1,27.

La plate-forme surbaissée 7 venant nettement plus bas que le châssis original du véhicule de base, l'arbre de renvoi 17 se trouve pratiquement à la même hauteur que le pont avant 5, d'où il résulte également une réduction des pertes mécaniques par frottement dans l'arbre à cardan 4.

Les Figs. 7 et 8 montrent deux autres formes de réalisation du dispositif de transmission suivant l'invention. Suivant la position relative du différentiel du pont avant 5 par rapport à la boîte de vitesse 2, la position de l'arbre de renvoi 17 peut être à volonté décalée vers la gauche ou vers la droite d'un plan vertical passant par l'axe de l'arbre de sortie 16.

La Fig. 9 montre une autre forme de réalisation où l'arbre de renvoi est décalé fortement vers le bas par rapport à l'axe de l'arbre de sortie 16 de la boîte de vitesse.

Par ailleurs, le dispositif ici décrit a été plus particulièrement conçu pour être raccordé à une boîte de vitesse de type Eaton 4106a® dont la configuration est particulièrement bien adaptée au raccordement du dispositif 1 tel que décrit. Il va de soi pour l'homme du métier qu'un tel dispositif peut être adapté aisément à d'autres types de boîtes de vitesse en adaptant le système de fixation ou de positionnement relatif de la boîte de vitesse 2 et du dispositif 1. En pratique, le montage rapide sur virtuellement tous les types de boîtes de vitesse est possible.

Il va de soi également que l'arbre de sortie 16 peut entraîner le premier engrenage 13 via une pièce de raccord intermédiaire, sans que l'on s'écarte pour autant du concept original de l'invention.

## Revendications

1. Véhicule automoteur à traction avant, à cabine avant (3, 6), et à châssis avec plate-forme surbaissée (7), comprenant un pont avant (5) et une boîte de vitesse (2) dont l'arbre de sortie (16) est disposé longitudinalement par rapport à l'axe du véhicule, à l'arrière de la boîte de vitesse (2), et connecté à un dispositif de transmission (1), ledit dispositif transmission (1) comprenant
- un carter (18) comportant une face avant (24) dotée de moyens de positionnement par rapport à la face arrière de la boîte de vitesse (2), un passage pour l'arbre de sortie (16) de la boîte de vitesse (2) et un passage pour un arbre de renvoi (17);
- un premier engrenage (13) apte à être monté sur l'arbre de sortie (16) de la boîte de vitesse (2);
- un deuxième engrenage (14) monté sur l'arbre de renvoi (17), lequel est disposé à un niveau inférieur au niveau de l'arbre de sortie (16) de la boîte de vitesse (2),
- un engrenage intermédiaire (15) en prise permanente avec le premier engrenage (13) et le deuxième engrenage (14), les trois engrenages (13, 14, 15) étant disposés sensiblement dans un même plan, ce plan étant transversal par rapport à l'axe du véhicule lorsque le dispositif (1) est monté sur le véhicule,
- le carter (18) comprenant un corps (22) en forme de cuvette, le fond de cette cuvette formant la face avant (24) du dit carter (18), et un couvercle (23) apte à être solidarisé par son pourtour de façon hermétique contre les flancs de la cuvette formant le corps (22), le dit couvercle (23) formant la face arrière du dit carter (18).

2. Véhicule suivant la revendication 1, **caractérisé en ce que** les trois engrenages (13, 14, 15) sont des engrenages droits à denture hélicoïdale.

3. Véhicule suivant la revendication 2, **caractérisé en ce que** les dents de ces engrenages (13, 14, 15) forment un angle de 20° avec leurs axes respectifs.

4. Véhicule suivant l'une quelconque des revendications précédentes, **caractérisé en ce que** les diamètres des engrenages (13, 14, 15) sont tels que le rapport de sortie du dispositif (1) est compris entre 1/1 et 1/1,6.

5. Véhicule suivant la revendication 4, **caractérisé en ce que** le rapport de sortie du dispositif (1) est de l'ordre de 1/1,27.

6. Véhicule suivant l'une quelconque des revendications précédentes, **caractérisé en ce que** le carter (18) comporte un point bas, un orifice de vidange (20) étant ménagé à ce point bas.

7. Véhicule suivant la revendication 1, **caractérisé en ce que** l'axe (30) de l'engrenage intermédiaire (15) et l'axe de l'arbre de renvoi (17) sont soutenus par des moyens de centrage et de guidage (27, 28, 32, 33) directement solidaires de la face avant (24) et de la face arrière (23) du carter (18).

8. Véhicule suivant la revendication 7, **caractérisé en ce que** la face arrière (23) est percée respectivement à hauteur de l'axe du deuxième engrenage (14) et de l'axe de l'engrenage intermédiaire (15), par des orifices permettant l'insertion et l'accès aux moyens de centrage et de guidage correspondants (32, 33), un opercule (34, 35) couvrant hermétiquement chacun de ces orifices.

9. Véhicule suivant l'une quelconque des revendications 7 et 8, **caractérisé en ce que** les moyens de centrage et de guidage (27, 28, 32, 33) sont des roulements à cylindre.

10. Véhicule suivant l'une quelconque des revendications précédentes, **caractérisé en ce que** l'axe de l'arbre de renvoi (17) est disposé à proximité du plan vertical comprenant l'axe de l'arbre de sortie (16) de la boîte de vitesse (2).

11. Véhicule suivant l'une quelconque des revendications 1 à 9, **caractérisé en ce que** l'arbre de renvoi (17) est déporté latéralement vers la gauche ou vers la droite par rapport au plan vertical comprenant l'axe de l'arbre de sortie (16) de la boîte de vitesse (2).

12. Véhicule suivant l'une quelconque des revendications précédentes, **caractérisé en ce qu'**un manchon (37) de protection est fixé sur la face avant (24) du carter (18), autour de l'axe de renvoi (17).

13. Véhicule suivant l'une quelconque des revendications précédentes, **caractérisé en ce qu'**il comprend, en outre, une pompe hydraulique.

## Patentansprüche

1. Kraftfahrzeug mit vorne liegendem Antrieb, mit einer vorne liegenden Kabine (3, 6) und mit einem flachen Chassis (7), das mit einem Vorderradantrieb (5) und einem Getriebegehduse (2) versehen ist, dessen Ausgangswelle (1,6) in Langsrichtung zur Fahrzeugachse hinter dem Getriebegehäuse (2) angeordnet ist, und verbunden mit einer Getriebevorrichtung (1), wobei die Vorrichtung (1)
**gekennzeichnet ist durch**
- ein Gehäuse mit einer Vorderseit (24), die auf der zum Getriebegehäuse (2) weisenden Seite mit Befestigungsmitteln ausgestattet ist, einer Öffnung für die Ausgangswelle (16) aus dem Gehäuse des Getriebes (2) und einer Öffnung für die Rücklaufwelle (17);
- ein erstes Zahnrad (13), das auf der Ausgangswelle (16) des Getriebegehauses (2) befestigbar ist;
- ein zweites Zahnrad (14), das auf die Rücklaufwelle (17) montiert ist, welche auf einem Niveau unterhalb des Niveaus der Ausgangswelle (16) des Getriebegehäuses (2) angeordnet ist,
- ein mittleres Zahnrad (15), das im permanenten Eingriff mit dem ersten Zahnrad (13) und dem zweiten Zahnrad (14) steht, wobei die drei Zahnräder (13, 14) genau in einer Ebene angeordnet sind, die, wenn das Getriebe (1) unter dem Fahrzeug montiert ist, senkrecht zur Fahrzeugachse steht, wobei
- das Gehäuse (18), einen Körper in der Form einer Wanne (22), wobei der Boden der Wanne die vordere Seite (24) des Gehäuses (18) bildet und einen Deckel (23) aufweist, der in seinem Umfangsbereich luftdicht gegen die Führungsflächen des wannenförmigen Körpers (22) anliegt und die Rückwand des Behälters (18) bildet.

2. Kraftfahrzeug nach Anspruch 1, **dadurch gekennzeichnet**, daß die drei Zahnräder (13, 14, 15) Stirnzahnräder mit schraubenförmiger Verzahnung sind.

3. Kraftfahrzeug nach Anspruch 2, **dadurch gekennzeichnet**, daß die Zähne der Zahnräder (13, 14, 15) einen Winkel von 20° mit ihren entsprechenden Achsen einschließen.

4. Kraftfahrzeug nach einem der obigen Ansprüche, **dadurch gekennzeichnet, daß** der Durchmesser der Zahnräder (13, 14, 15) derart ist, dass das Übersetzungsverhältnis des Getriebes (1) zwischen 1: 1 und 1 : 1,6 liegt.

5. Kraftfahrzeug nach Anspruch 4, **dadurch gekennzeichnet**, daß das Übersetzungsverhältnis des Getriebes (1) von der Größenordnung 1 : 1,27 ist.

6. Kraftfahrzeug nach einem der vorherigen Ansprüche, **dadurch gekennzeichnet, daß** das Gehäuse (18) einen tiefsten Punkt aufweist, wobei eine Ausgußöffnung (20) in dem tiefsten Punkt angeordnet ist.

7. Kraftfahrzeug nach Anspruch 1, **dadurch gekennzeichnet**, daß die Achse (30) des mittleren Zahnrads (15) und die Achse der Rücklaufwelle (17) durch Einrichtungen zur Zentrierung und Führung (27, 28, 32, 33) unmittelbar gemeinsam von der vorderen Seite (24) und der Rückseite (23) des Gehäuses (18) abgestutzt sind.

8. Kraftfahrzeug nach Anspruch 7, **dadurch gekennzeichnet**, daß die Rückwand (23) auf der entsprechenden Höhe der Achse des zweiten Zahnrads (14) und der Achse des mittleren Zahnrads (15) Öffnungen aufweist, die das Einführen und den Zugriff auf die is Einrichtung zur Zentrierung und Führung (32, 33) zulassen, wobei ein Deckel (34, 35) jede der Öffnungen luftdicht abdeckt.

9. Kraftfahrzeug nach einem der obigen Ansprüche 7 oder 8, **dadurch gekennzeichnet, daß** die Einrichtungen zur Zentrierung und Führung (27. 28, 32, 33) Wälzlager sind.

10. Kraftfahrzeug nach einem der vorangehenden Ansprüche, **dadurch gekennzeichnet, daß** die Achse der Rücklaufwelle (17) nahe zur senkrechten Ebene angeordnet ist, in der die Achse der Ausgangswelle (16) des Getriebegehäuses (2) liegt.

11. Kraftfahrzeug nach einem der vorangegangenen Ansprüche 1 bis 9, **dadurch gekennzeichnet, daß** die Rücklaufwelle (17) seitlich nach rechts oder nach links bezüglich der senkrechten Ebene verschoben ist, in der die Achse der Ausgangswelle (16) des Getriebegehäuses (2) liegt.

12. Kraftfahrzeug nach einein der vorangehenden Ansprüche, **dadurch gekennzeichnet, daß** eine eine Schutzmuffe (37) auf der Vorderseite (24) des Gehäuses (18) rings um die Achse der Rücklaufwelle (17) befestigt ist.

13. Kraftfahrzeug nach einem der vorangehenden Ansprüche, **dadurch gekennzeichnet, daß** sie zusätzlich eine hydraulischen Pumpe aufweist.

## Claims

1. Front-wheel drive motor vehicle with a front cab (3, 6) and lowered chassis (7), comprising a front axle assembly (5) and a gear box (2), the output shaft (16) of which is arranged longitudinally with respect to the axis of the vehicle, behind the gearbox (2), and connected to a transmission device (1), the said device (1) being **characterized in that** it comprises
- a casing (18) comprising a front face (24) provided with means for positioning relative to the rear face of the gearbox (2), a passage for the output shaft (16) of the gearbox (2) and a passage for a transfer shaft (17);
- a first gear (13) which can be mounted on the output shaft (16) of the gearbox (2)
- a second gear (14) mounted on the transfer shaft (17), which is arranged at a level lower than the level of the output shaft (16) of the gearbox (2),
- an intermediate gear (15) permanently in mesh with the first gear (13) and the second gear (14), the three gears (13, 14, 15) being arranged substantially in one and the same plane which is transverse with respect to the axis of the vehicle when said transmission device (1) is mounted on said vehicle, the casing (18) comprising a dish-shaped body (22), the bottom of this dish forming the front face (24) of the said casing (18), and a cover (23) which can be secured hermetically by its perimeter against the flanks of the dish forming the body (22), the said cover (23) forming the rear face of said casing (18).

2. Vehicle according to Claim 1, **characterized in that** the three gears (13, 14, 15) are spur gears with helical teeth.

3. Vehicle according to Claim 2, **characterized in that** the teeth of these gears (13, 14, 15) form an angle of 201 with their respective axes.

4. Vehicle according to any one of the preceding claims, **characterized in that** the diameters of the gears (13, 14, 15) are such that the output ratio of the device (1) is between 1/1 and 1/1.6.

5. Vehicle according to Claim 4, **characterized in that** the output ratio of the device (1) is approximately 1/1.27.

6. Vehicle according to any one of the preceding claims, **characterized in that** the casing (18) has a low point, a drain orifice (20) being made at this low point.

7. Vehicle according to Claim 1, **characterized in that** the axis (30) of the intermediate gear (15) and of the transfer shaft (17) are supported by centering and guiding means (27, 28, 32, 33) secured directly to the front face (24) and to the rear face (23) of the casing (18).

8. Device according to Claim 7, **characterized in that** the rear face (23) comprises, respectively level with the axis of the second gear (14) and with the axis of the intermediate gear (15), an orifice allowing the insertion and access to these centering and guiding means (32, 33), a closure plate (34, 35) hermetically covering each of these orifices.

9. Device according to any one of the claims 7 and 8, **characterized in that** the centering and guiding means (27, 28, 32, 33) are roller bearings.

10. Device according to any one of the preceding claims, **characterized in that** the axis of the transfer shaft (17) is arranged close to the vertical plane containing the axis of the output shaft (16) of the clutch (2).

11. Device according to any one of Claims 1 to 9, **characterized in that** the transfer shaft (17) is laterally offset to the left or to the right with respect to the vertical plane containing the axis of the output shaft (16) of the clutch (2).

12. Device according to any one of the preceding claims, **characterized in that** a protective boot (37) is fixed to the front face (24) of the casing (18), around the transfer shaft (17).

13. Device according to any one of the preceding claims, **characterized in that** it further comprises a hydraulic pump.
